# EUROPÄISCHE PATENTANMELDUNG

(11) **EP 4 597 802 A1**
(43) Veröffentlichungstag der Anmeldung: **06.08.2025**
(21) Anmeldenummer: 24155304.9
(22) Anmeldetag: 01.02.2024
(51) Int. Cl.: H02K 3/52, H02K 5/06, H02K 5/15

(54) **ELEKTRISCHE HANDWERKZEUGMASCHINE**

(71) Anmelder: Hilti Aktiengesellschaft, 9494 Schaan (LI)
(72) Erfinder: Ludwig, Wolfgang, 86874 Zaisertshofen (DE); Kögel, Michael, 86980 Ingenried (DE); Ruckpaul, Anne, 81241 München (DE)
(74) Vertreter: Hilti Aktiengesellschaft Corporate Intellectual Property

(57) **Zusammenfassung**

Bürstenloser Gleichstrommotor mit einem Stator, einem abtriebsseitigen Lagerschild, das einstückig ausgebildet ist und aus Kunststoff besteht, einem mit einer Rotorwelle ausgestatteten Rotor, und mit einem Rotorlager, in dem einerseits die Rotorwelle aufgenommen ist und das anderseits in dem abtriebsseitigen Lagerschild abgestützt ist, wobei das abtriebsseitige Lagerschild auf einem Außenumfang des Stators aufgepresst ist.

## Beschreibung

### Elektrische Handwerkzeugmaschine

Die vorliegende Erfindung betrifft einen bürstenlosen Gleichstrommotor (BLDC-Motor) mit einem Stator, einem abtriebsseitigen Lagerschild, das einstückig ausgebildet ist und aus Kunststoff besteht, einem mit einer Rotorwelle ausgestatteten Rotor, und mit einem Rotorlager, in dem einerseits die Rotorwelle aufgenommen ist und das anderseits in dem abtriebsseitigen Lagerschild abgestützt ist. Solche BLDC-Motoren sind grundsätzlich aus dem Stand der Technik bekannt und kommen beispielsweise in Elektrowerkzeugen zum Einsatz.

DE 19542021 C2 offenbart ein aus Kunststoff bestehendes Lagerschild mit einer ringförmigen Aussparung zur Aufnahme eines Wickelkopfes eines Elektromotors, wobei die Aussparung zur Umkapselung des Wickelkopfes radial nach innen von einer an der Innenseite des Lagerschilds angeformten Ringfläche begrenzt ist, die auf der dem Wickelkopf zugekehrten Umfangsseite leicht konisch axial nach innen abfallend verläuft und als Presssitz ausgebildet ist.

EP 1 722 459 B1 beschreibt eine elektrische Maschine mit einem Stator, einer auf der Stirnseite des Stators positionierten Isolierendscheibe, einem Rotor der eine Rotorwelle aufweist, und einem Lager für den Rotor, wobei das Lager an einem Lagerbock abgestützt ist, der seinerseits axial auf der Stirnfläche des Stators oder auf der Isolierendscheibe aufliegt, wobei die Innenwand der Isolierendscheibe mit einem Schnapphaken versehen ist, der eine zusätzliche axiale Fixierung des Lagerbockes bewirkt.

Es ist daher Aufgabe der vorliegenden Erfindung einen bürstenlosen Gleichstrommotor bereitzustellen, der einen einfachen Aufbau aufweist, wobei dieser Aufbau die Ausbildung eines gleichmäßigen Ringspalts begünstigt.

Die Aufgabe wird dadurch gelöst, dass das abtriebsseitige Lagerschild auf einem Außenumfang des Stators aufgepresst ist.

In einer besonders bevorzugten Ausgestaltung weist der bürstenlose Gleichstrommotor eine stirnseitig am Stator angeordnete Wickelstütze auf. Es hat sich als vorteilhaft herausgestellt, wenn die Wickelstütze einen Schnapphaken aufweist, der mit dem Lagerschild in Eingriff steht. In einer weiteren bevorzugten Ausgestaltung weist der Schnapphaken eine in radialer Richtung nach außen gerichtete Nase auf.

Es hat sich als vorteilhaft herausgestellt, wenn das abtriebsseitige Lagerschild einen Federsteg aufweist. In einer besonders bevorzugten Ausgestaltung erstreckt sich der Federsteg in radialer Richtung nach außen. Es hat sich als vorteilhaft herausgestellt, wenn der Federsteg in axialer Richtung elastisch auslenkbar ist.

Es hat sich weiterhin als vorteilhaft herausgestellt, wenn der Federsteg den Schnapphaken gegen Lösen sichert.

In einer weiteren bevorzugten Ausgestaltung ist die stirnseitig am Stator angeordnete Wickelstütze einstückig ausbildet. Es hat sich als vorteilhaft herausgestellt, wenn die Wickelstütze und von dem abtriebsseitige Lagerschild verschieden ist. In einer besonders bevorzugten Ausgestaltung ist die Wickelstütze vollständig in einem durch das abtriebsseitige Lagerschild aufgespannten Volumen aufgenommen. In einer weiteren bevorzugten Ausgestaltung ist der Schnapphaken vom Rotorlager, insbesondere vollständig, beabstandet. Es hat sich als vorteilhaft herausgestellt, wenn das abtriebsseitige Lagerschild ausschließlich auf dem Außenumfang des Stators aufgepresst ist.

Alternativ oder zusätzlich kann das abtriebsseitige Lagerschild unmittelbar auf dem Außenumfang des Stators aufgepresst sein.

In einer besonders bevorzugten Ausgestaltung ist das abtriebsseitige Lagerschild ein Spritzgussteil. Es hat sich als vorteilhaft herausgestellt, wenn das abtriebsseitige Lagerschild frei von Verschraubungen ist. In einer weiteren bevorzugten Ausgestaltung weist die Wickelstütze eine Mehrzahl von Schnapphaken auf, vorzugsweise sechs Schnapphaken. Das Lagerschild kann eine Mehrzahl von Federstegen aufweisen, vorzugsweise sechs Federstege.

Die Aufgabe wird ebenfalls gelöst durch eine elektrische Handwerkzeugmaschine mit einem vorbeschriebenen bürstenlosen Gleichstrommotor.

Weitere Vorteile ergeben sich aus der folgenden Figurenbeschreibung. In den Figuren ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein bevorzugtes Ausführungsbeispiel eines BLDC-Motors in Schnittdarstellung;
- Figur 2: das Ausführungsbeispiel der Figur 1 in perspektivischer Darstellung; und
- Figur 3: das Lagerschild der Figur 1 und 2 in Schnittdarstellung.

### Ausführungsbeispiel:

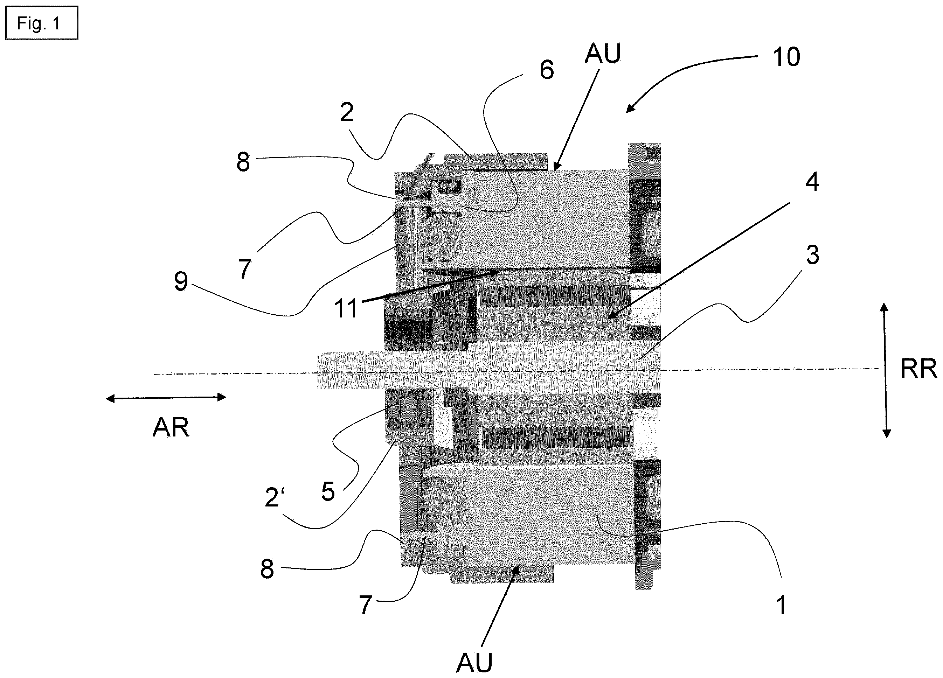

Figur 1 ein bevorzugtes Ausführungsbeispiel eines bürstenlosen Gleichstrommotors 10 in Schnittdarstellung. Der bürstenlose Gleichstrommotor 10 ist Teil einer hier nicht dargestellten Handwerkzeugmaschine.

Der bürstenlose Gleichstrommotor 10 ist ausgestattet mit einem Stator 1 und einem abtriebsseitigen Lagerschild 2 (A-Lagerschild). Das abtriebsseitige Lagerschilder ist einstückig ausgebildet und besteht aus Kunststoff. Das abtriebsseitige Lagerschild 2 ist als Spritzgussteil bereitgestellt. Durch die Einfachheit und Flexibilität beim Kunststoff können enge Toleranzen eingehalten werden, welche einen gleichmäßigen Ringspalt 11 gewährleisten.

Der bürstenlose Gleichstrommotor 10 weist weiterhin einen mit einer Rotorwelle 3 ausgestatteten Rotor 4 und ein Rotorlager 5 auf. In diesem beispielhaft als Kugellager bereitgestellten Rotorlager 5 ist einerseits die Rotorwelle 3 aufgenommen. Andererseits ist das Rotorlager 5 in dem abtriebsseitigen Lagerschild 2 abgestützt. Die Abstützung des Rotorlagers 5 im Lagerschild 2 erfolgt über eine im Lagerschild 2 ausgebildeten Lageraufnahmering 2`.

Wie der Figur 1 entnommen werden kann, ist das abtriebsseitige Lagerschild 2 auf einem Außenumfang AU des Stators 1 aufgepresst. Dabei ist das abtriebsseitige Lagerschild 2 ausschließlich und unmittelbar auf dem Außenumfang AU des Stators 1 aufgepresst. Das Aufpressen ermöglicht einen kleineren Bauraum des bürstenlosen Gleichstrommotors 10 und die Zuverlässigkeit bei der Montage wird erhöht.

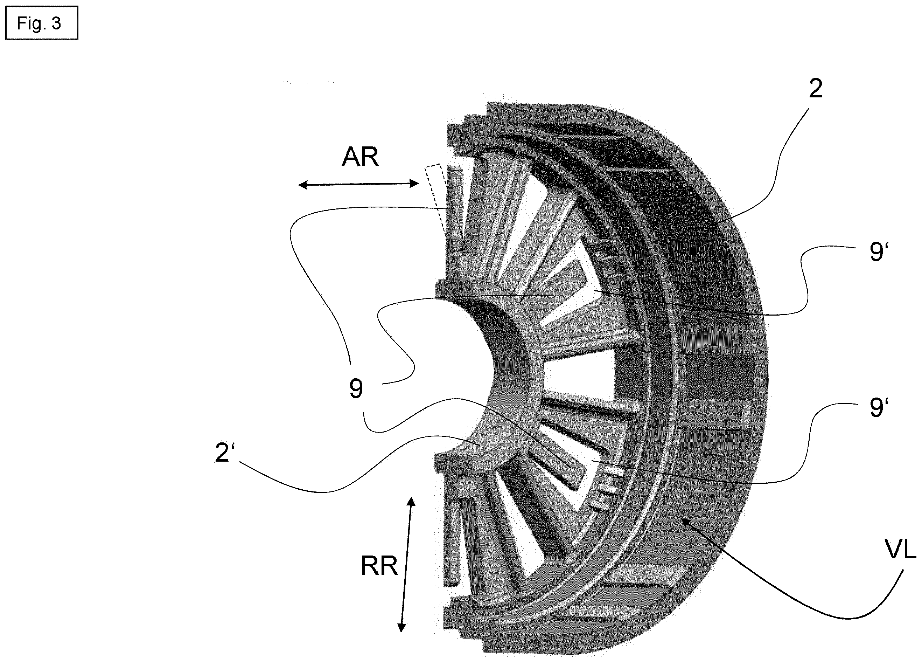

Der bürstenlose Gleichstrommotor 10 weist darüber hinaus eine stirnseitig am Stator 1 angeordnete Wickelstütze 6 auf. Die stirnseitig am Stator 2 angeordnete Wickelstütze 6 ist einstückig ausbildet und ist ein von dem abtriebsseitige Lagerschild 2 verschiedenes Bauteil. Die Wickelstütze 6 ist vollständig in einem durch das abtriebsseitige Lagerschild 2 aufgespannten Volumen VL (vgl. Figur 3) aufgenommen.

Die Wickelstütze 6 ist ausgestattet mit einem Schnapphaken 7, der mit dem Lagerschild 2 in Eingriff steht. Dazu weist der Schnapphaken 7 eine in radialer Richtung RR nach außen gerichtete Nase 8 auf. Das abtriebsseitige Lagerschild 2 weist wiederum einen Federsteg 9 auf, der sich in radialer Richtung RR nach außen erstreckt und in axialer Richtung AR elastisch auslenkbar ist.

Wie der Figur 1 entnommen werden kann, sichert der Federsteg 9 den Schnapphaken 7 gegen Lösen. Damit ist ein zerstörungsfreies Lösen der Verbindung zwischen abtriebsseitigen Lagerschild 2 und Wickelstütze 6 praktisch unmöglich. Das abtriebsseitige Lagerschild 2 ist dabei frei von Verschraubungen.

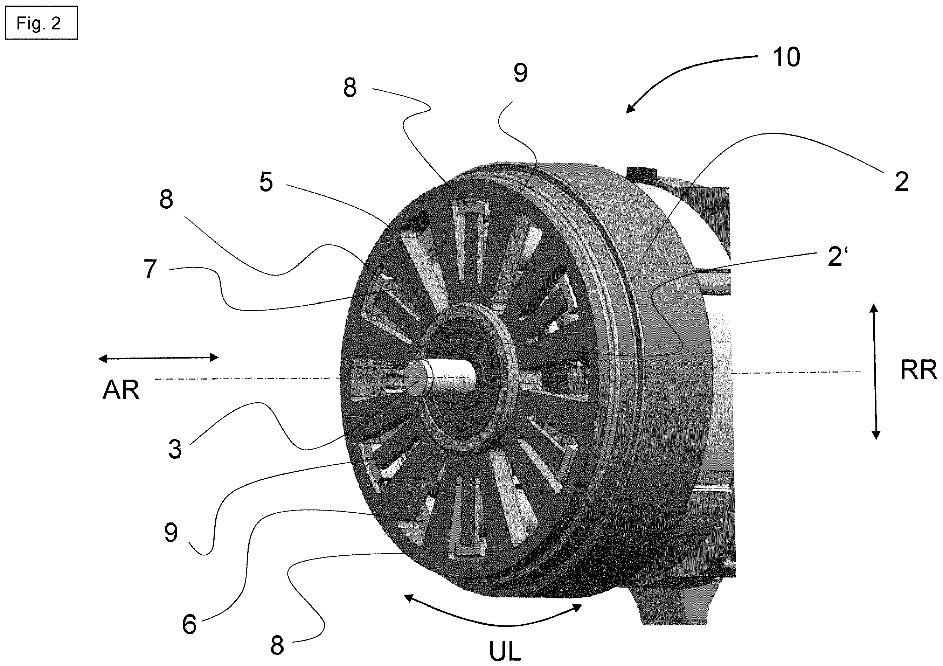

Figur 2 das Ausführungsbeispiel der Figur 1 in perspektivischer Darstellung. In Figur 2 ist gut zu erkennen, dass das abtriebsseitige Lagerschild 2 insgesamt sechs Federstege 9 aufweist. Die Federstege 9 sind gleichmäßig voneinander beabstandet entlang eines Umfangs UL des abtriebsseitigen Lagerschildes 2 angeordnet. Die - sowohl in axialer Richtung AR als auch in radialer Richtung RR vollständig vom Lagerschild 2 umfasste Wickelstütze 6 - weist ihrerseits sechs Schnapphaken 7 auf, die jeweils mit dem Lagerschild 2 in Eingriff stehen. Ein Verrasten im Lagerschild 2 ist durch eine jeweilige Nase 8 der Schnapphaken 7 realisiert.

Alle Schnapphaken 7 sind in radialer Richtung RR vom Rotorlager 9 beabstandet.

Figur 3 zeigt schließlich das abtriebsseitige Lagerschild der Figur 1 und 2 in Schnittdarstellung. Das abtriebsseitige Lagerschild 2 spannt ein Volumen VL auf in dem die hier nicht gezeigte Wickelstütze vollständig aufgenommen ist. Eine im Lagerschild 2 ausgebildete und den Federsteg 9 umgebende Ausnehmung 9` zählt zum vom abtriebsseitigen Lagerschild 2 aufgespannten Volumen VL.

Ein jeweiliger Federsteg 9 erstreckt sich - ausgehend vom zentral im Lagerschild 2 ausgebildeten Lageraufnahmering 2` - in radialer Richtung RR nach außen. Die Federstege 9 sind im Sinne eines nachgiebigen Mechanismus in axialer Richtung AR elastisch auslenkbar. Dadurch können die Federstege 9 im Zuge des Fügens von Lagerschild 2 und Wickelstütze 6 in axialer Richtung AR nachgeben (gestrichelt dargestellt). Sobald Lagerschild 2 und Wickelstütze 6 gefügt und die Schnapphaken 7 bzw. deren Nasen 8 mit dem Lagerschild in Eingriff sind (vgl. Figur 1) befinden sich die Federsteg 9 in unausgelenkter Lage und sichern die Schnapphaken 7 gegen Lösen.

### Bezugszeichenliste

- 1: Stator
- 2: Lagerschild
- 2`: Lageraufnahmering
- 3: Rotorwelle
- 4: Rotor
- 5: Rotorlager
- 6: Wickelstütze
- 7: Schnapphaken
- 8: Nase des Schnapphakens
- 9: Federsteg
- 9`: Ausnehmung
- 10: Bürstenloser Gleichstrommotor
- 11: Ringspalt

- AR: Axiale Richtung
- AU: Außenumfang des Stators
- RR: Radiale Richtung
- UL: Umfang des Lagerschilds
- VL: Volumen Lagerschild

## Patentansprüche

1. Bürstenloser Gleichstrommotor (10) mit einem Stator (1), einem abtriebsseitigen Lagerschild (2), das einstückig ausgebildet ist und aus Kunststoff besteht, einem mit einer Rotorwelle (3) ausgestatteten Rotor (4), und mit einem Rotorlager (5), in dem einerseits die Rotorwelle (3) aufgenommen ist und das anderseits in dem abtriebsseitigen Lagerschild (2) abgestützt ist,
**dadurch gekennzeichnet, dass** das abtriebsseitige Lagerschild (2) auf einem Außenumfang (AU) des Stators (1) aufgepresst ist.

2. Bürstenloser Gleichstrommotor (10) nach Anspruch 1,
**dadurch gekennzeichnet, dass** der bürstenlose Gleichstrommotor (10) eine stirnseitig am Stator (1) angeordnete Wickelstütze (6) aufweist, wobei die Wickelstütze (6) einen Schnapphaken (7) aufweist, der mit dem Lagerschild (2) in Eingriff steht.

3. Bürstenloser Gleichstrommotor (10) nach Anspruch 2,
**dadurch gekennzeichnet, dass** der Schnapphaken (7) eine in radialer Richtung (RR) nach außen gerichtete Nase (8) aufweist.

4. Bürstenloser Gleichstrommotor (10) nach 3,
**dadurch gekennzeichnet, dass** das abtriebsseitige Lagerschild (2) einen Federsteg (9) aufweist, der sich in radialer Richtung (RR) nach außen erstreckt und in axialer Richtung (AR) elastisch auslenkbar ist.

5. Bürstenloser Gleichstrommotor (10) nach 4,
**dadurch gekennzeichnet, dass** der Federsteg (9) den Schnapphaken (7) gegen Lösen sichert.

6. Bürstenloser Gleichstrommotor (10) nach einem der Ansprüche 2 bis 5,
**dadurch gekennzeichnet, dass** die stirnseitig am Stator angeordnete Wickelstütze (6) einstückig ausbildet und von dem abtriebsseitige Lagerschild (2) verschieden ist.

7. Bürstenloser Gleichstrommotor (10) nach einem der Ansprüche 2 bis 6,
**dadurch gekennzeichnet, dass** die Wickelstütze (6) vollständig in einem durch das abtriebsseitige Lagerschild (2) aufgespannten Volumen (VL) aufgenommen ist.

8. Bürstenloser Gleichstrommotor (10) nach einem der Ansprüche 2 bis 7,
**dadurch gekennzeichnet, dass** der Schnapphaken (7) vom Rotorlager (9) beabstandet ist.

9. Bürstenloser Gleichstrommotor (10) nach einem der vorangehenden Ansprüche,
**dadurch gekennzeichnet, dass** das abtriebsseitige Lagerschild (2) ausschließlich und/oder unmittelbar auf dem Außenumfang (AU) des Stators (1) aufgepresst ist.

10. Bürstenloser Gleichstrommotor (10) nach einem der vorangehenden Ansprüche,
**dadurch gekennzeichnet, dass** das abtriebsseitige Lagerschild (2) ein Spritzgussteil ist.

11. Bürstenloser Gleichstrommotor (10) nach einem der vorangehenden Ansprüche,
**dadurch gekennzeichnet, dass** das abtriebsseitige Lagerschild (2) frei von Verschraubungen ist.

12. Elektrische Handwerkzeugmaschine mit einem bürstenlosen Gleichstrommotor (10) nach einem der vorangehenden Ansprüche.
